# EUROPÄISCHE PATENTSCHRIFT

(11) **EP 2 475 901 B1**
(45) Veröffentlichungstag und Bekanntmachung des Hinweises auf die Patenterteilung: **11.11.2015**
(21) Anmeldenummer: 10752542.0
(22) Anmeldetag: 02.09.2010
(51) Int. Cl.: F16C 33/66, F16C 33/76, F16C 19/18, F16C 25/06, F16C 25/08

(54) **LAGERANORDNUNG**
BEARING ARRANGEMENT
ENSEMBLE PALIER

(30) Priorität: 12.09.2009 EP 09011700
(43) Veröffentlichungstag der Anmeldung: 18.07.2012
(73) Patentinhaber: Aktiebolaget SKF, 415 50 Göteborg (SE)
(72) Erfinder: BETTENHAUSEN, Jens, 97900 Külsheim (DE); HAUCK, Helmut, 97502 Euerbach (DE); HEEGE, Thomas, 97422 Schweinfurt (DE); HERBST, Hubert, 97503 Gädheim (DE); KAMM, Sandra, 97469 Gochsheim (DE)
(74) Vertreter: Schonecke, Mitja
(86) Internationale Anmeldenummer: PCT/EP2010/062838
(87) Internationale Veröffentlichungsnummer: WO 2011/029764

(56) Entgegenhaltungen:
- EP-A2- 1 845 271
- DE-A1- 10 123 677
- US-A- 2 195 795
- US-A- 3 913 993
- US-A- 4 783 182
- US-A- 5 642 946

## Beschreibung

Die Erfindung betrifft eine Lageranordnung, umfassend zwei nebeneinander angeordnete Wälzlager, wobei jedes Wälzlager einen Innenring und einen Außenring aufweist, wobei zwischen den Lagerringen ein Ringraum gebildet wird, wobei in dem Ringraum Wälzkörper angeordnet sind, wobei die beiden Innenringe oder die beiden Außenringe der beiden Wälzlager einstückig ausgebildet sind, wobei in dem Ringraum mindestens ein Volumenelement angeordnet ist, das den Ringraum in einem axialen Bereich zumindest teilweise ausfüllt, wobei Mittel vorhanden sind, mit denen zwischen den beiden nicht einstückig ausgebildeten Lagerringen eine in axiale Richtung wirkende Vorspannkraft erzeugbar ist.

Eine gattungsgemäße Lageranordnung offenbart beispielsweise die US 4 783 182 A. Andere Lösungen zeigen die US 2 195 795 A, die DE 101 23 677 A1, die US 3 913 993 A, die EP 1 845 271 A2 und die US 5 642 946 A. Derartige Lageranordnungen, die als (mindestens) zweireihige Lager bezeichnet werden, sind im Stand der Technik also hinlänglich bekannt. Dabei ist zwecks Aufrechterhaltung optimaler Betriebsbedingungen und einer hohen Gebrauchsdauer eine ausreichende Schmierung notwendig.

Dies gilt insbesondere dann, wenn die Drehachse der Lageranordnung im Betrieb nicht horizontal angeordnet ist, sondern beispielsweise vertikal. Um dem stetigen Kostendruck zu genügen, ist eine Fettschmierung einer Ölschmierung vorzuziehen. Allerdings ergibt sich bei einer Lagerung, bei der die zu lagernde Welle nicht horizontal ausgerichtet ist, infolge der Schwerkraft das Problem, dass das zur Schmierung notwendige Fett bzw. das darin befindliche Öl über die Zeit dazu neigt, aus dem Bereich der Wälzlagerlaufbahnen zu entweichen. Dies bedingt zumeist in einem solchen Falle eine komplette Abdichtung der eingesetzten Lager.

Kommt es zu einem Schmierstoffverlust der oberen Wälzkörperreihe, führt dies zu Mangelschmierung und in der Folge zu metallischem Kontakt, der nicht nur einen höheren Abrieb, sondern auch eine höhere Reibung in nachteilhafter Weise nach sich zieht. Infolge dessen ergibt sich eine höhere Betriebstemperatur, was zu einer reduzierten Schmierstoffgebrauchsdauer (insbesondere Fettgebrauchsdauer) führt. Dies wiederum hat in nachteiliger Weise eine geringere Gebrauchsdauer des Lagers zur Folge, wenn die jetzt öfter nötige Wartung nicht sorgfältig ausgeführt wird.

Für eine optimale Lagerung ist es darüber hinaus gelegentlich nötig, in der mindestens zweireihigen Lagerung eine gewisse axiale Vorspannung aufrechtzuerhalten. Vorgespannte Lager sind zwar als solche hinlänglich bekannt, allerdings ist die Montage der Vorspannelemente mitunter sehr aufwändig; die Vorspannelemente lassen in ihrer Wirkung zudem über die Zeit mitunter nachteilig nach.

Es existieren Lageranwendungen, die bewusst eine Schräglage der Lagerungen zulassen oder fordern, im Extremfall sogar eine senkrechte Rotationsachse vorschreiben.

Der Erfindung liegt die Aufgabe zugrunde, eine zwei- oder mehrreihige Lageranordnung vorzuschlagen, die es erlaubt, auch Positionen der Drehachse zuzulassen, die nicht der horizontalen Lage entsprechen, wobei speziell an eine vertikale Anordnung der Drehachse der Lageranordnung gedacht ist. Dabei soll stets sichergestellt werden, dass eine hinreichende Versorgung der Lagerung mit Schmiermittel gewährleistet ist. Darüber hinaus soll sichergestellt werden, dass eine Lagervorspannung in einfacher Weise hergestellt und im Betrieb aufrechterhalten werden kann. Dabei soll eine kostengünstige Konzeption möglich sein.

Die Lösung dieser Aufgabe durch die Erfindung ist dadurch gekennzeichnet, dass die Mittel zur Erzeugung der axial wirkenden Vorspannkraft durch das Volumenelement verwirklicht sind, wobei das Volumenelement aus zwei Seitenteilen gebildet wird, zwischen denen ein Mittenteil angeordnet ist, wobei das Mittenteil aus Kunststoff- oder Gummimaterial besteht, das zwischen den Seitenteilen angeordnet ist, wobei das Mittenteil ein zwischen die Seitenteile in situ spritzgegossenes Formteil ist oder wobei das Mittenteil als mehrteiliger Formkörper ausgebildet ist, wobei jedes Teil des mehrteiligen Formkörpers die Form eines Kreisringsektors aufweist.

In diesem Falle kann vorgesehen werden, dass die Mittel zur Erzeugung der axial wirkenden Vorspannkraft durch zwei sich in radiale Richtung erstreckende ringförmige und am Volumenelement angeformte Vorsprünge gebildet werden, die in ringnutförmige Vertiefungen eingreifen, die in den benachbarten Seitenbereichen der beiden nicht einstückig ausgebildeten Lagerringe eingearbeitet sind. Bei einer Ausführungsform ist in diesem Falle vorgesehen, dass sich die ringförmigen Vorsprünge radial nach außen erstrecken und in ringnutförmige Vertiefungen eingreifen, die in zwei separate Außenringe eingearbeitet sind. Alternativ ist es möglich, dass sich die ringförmigen Vorsprünge radial nach innen erstrecken und in ringnutförmige Vertiefungen eingreifen, die in zwei separate Innenringe eingearbeitet sind.

Die Seitenteile können dabei aus Blech bestehen, insbesondere aus dünnem Blech mit konstanter Wandstärke.

Eine Lösung sieht dabei vor, dass das Mittenteil ein O-Ring ist.

Vorgesehen kann speziell bei dieser Ausgestaltung auch sein, dass die beiden Seitenteile - insbesondere als jeweils ringförmige Strukturen ausgebildet - im radial innenliegenden Endbereich so ausgebildet sind, dass sie hakenförmig ineinander greifen, wodurch eine Dichtfunktion im radial innenliegenden Endbereich hergestellt wird, was für das Spritzgießen in situ vorteilhaft ist.

Insbesondere kann vorgesehen werden, dass das Mittenteil als zweiteiliger Formkörper ausgebildet ist, wobei sich jedes Teil des Formkörpers über einen Umfangswinkel von 180° erstreckt; der Formkörper ist demgemäß halbkreisringförmig.

Eine Alternative hierzu sieht vor, dass das Mittenteil als einteiliger Formkörper ausgebildet ist. Dieser ringförmige Körper hat an einer Umfangsstelle eine Ausnehmung, so dass er radial zwischen die Seitenteile eingeschoben werden kann.

Die Teile des Mittenteils können dabei mit Rastmitteln versehen sein, mit denen sie in radiale Richtung relativ zu den Seitenteilen festgelegt werden können.

Weiterhin können Verbindungsmittel vorhanden sein, mit denen die Seitenteile und das Mittenteil miteinander verbunden sind. Die Verbindungsmittel können dabei beispielsweise als radial außenliegend angeordneter Schweißpunkt ausgebildet sein.

Die Wälzlager können bevorzugt als Kugellager, insbesondere als Rillenkugellager oder Schrägkugellager, ausgebildet sein.

Das Volumenelement ist im axialen Bereich zwischen den Wälzkörpern der beiden Wälzlager angeordnet, wobei sie den sich zwischen den Wälzkörpern befindlichen Ringraum zwischen den Lagerringen weitgehend ausfüllen. Dabei ist besonders bevorzugt vorgesehen, dass sich das Volumenelement über den Großteil der radialen Erstreckung des Ringraums, insbesondere über mindestens 50 % der radialen Erstreckung des Ringraums, erstreckt.

Um eine möglichst kostengünstige, aber auch über die gesamte Lebensdauer funktionsfähige Lösung zur Verfügung zu stellen, sieht die Erfindung also vor, dass eine zumindest zweireihige Wälzlagerung eingesetzt wird, die zwischen den Wälzkörperreihen zumindest ein angeordnetes Zwischenelement (Volumenelement) aufweist. Dieses Zwischenelement füllt zumindest einen Teil des vorhandenen Zwischenraumes zwischen den Lagerringen aus mit dem Ziel, das sich im Bereich der Wälzkörperreihen befindliche Schmiermittel in den Laufbahnbereichen zu halten.

Demgemäß erlaubt der erfindungsgemäße Vorschlag eine Reduzierung des freien Raums (Ringraums) zwischen den Wälzkörperreihen, was insbesondere dann vorteilhaft ist, wenn es sich um den Raum unterhalb der oberen Wälzkörperreihe bei vertikaler Anordnung der Drehachse der Lageranordnung handelt. Das Schmierfett wird durch das Volumenelement in vorteilhafter Weise zurückgehalten. Die integrierte Vorspannmittel (Mittel zur Erzeugung einer axialen Vorspannkraft) erlauben dauerhaft die Aufrechterhaltung einer gewissen Lagervorspannung und somit eine optimale Betriebsweise. Hiermit ist es möglich, die mindestens zwei Wälzlager in definierter Weise anzustellen.

Der erfindungsgemäße Vorschlag erlaubt also eine schräge Einbaulage der Lageranordnung (im gesamten Bereich zwischen der horizontalen Anordnung einer Welle bis zu deren vertikaler Anordnung), wobei ein fettgeschmiertes Systems vorgesehen ist.

Die vorgeschlagene Lageranordnung kommt besonders bei den genannten Kugellagern zum Einsatz, wobei diese - wie gesagt - bevorzugt als Rillenkugellager oder Schrägkugellager ausgeführt sind. Möglich ist der Einsatz des erfindungsgemäßen Vorschlags allerdings auch bei anderen Lagertypen, beispielsweise bei Kegelrollenlagern oder auch bei Axialpendelrollenlagern.

Die Richtung der axialen Vorspannung durch die hierfür vorgeschlagenen Mittel kann in beide Achsrichtungen erfolgen, d. h. die Vorspannmittel können die beiden separat ausgebildeten Lagerringe voneinander weg drücken oder aufeinander zu ziehen. Demgemäß ist es möglich, insbesondere bei der Verwendung von Kugellagern eine X- oder eine O-Anordnung der beiden Wälzlager herzustellen.

In der Zeichnung sind sowohl Ausführungsbeispiele der Erfindung als auch andere Beispiele dargestellt, die nicht zur Erfindung gehören aber das Verständnis der Erfindung erleichtern. Es zeigen:
- Fig. 1: den Radialschnitt durch eine Lageranordnung gemäß einem ersten Beispiel,
- Fig. 2: den Radialschnitt durch eine Lageranordnung gemäß einem zweiten Beispiel,
- Fig. 3: den Radialschnitt durch eine Lageranordnung gemäß einem dritten Beispiel,
- Fig. 4: den Radialschnitt durch eine Lageranordnung gemäß einem vierten Beispiel,
- Fig. 5: den Radialschnitt durch eine Lageranordnung gemäß einem fünften Beispiel,
- Fig. 6: den Radialschnitt durch eine Lageranordnung gemäß einer ersten Ausführungsform der Erfindung,
- Fig. 7: den Radialschnitt durch eine Lageranordnung gemäß einer zweiten Ausführungsform der Erfindung,
- Fig. 8: den Radialschnitt durch eine Lageranordnung gemäß einer dritten Ausführungsform der Erfindung,
- Fig. 9: den Radialschnitt durch eine Lageranordnung, wobei der einteilige Außenring einstückig mit einem Funktionselement ausgebildet ist, und
- Fig. 10: den Radialschnitt durch eine Lageranordnung, wobei der einteilige Innenringring einstückig mit einem Funktionselement ausgebildet ist.

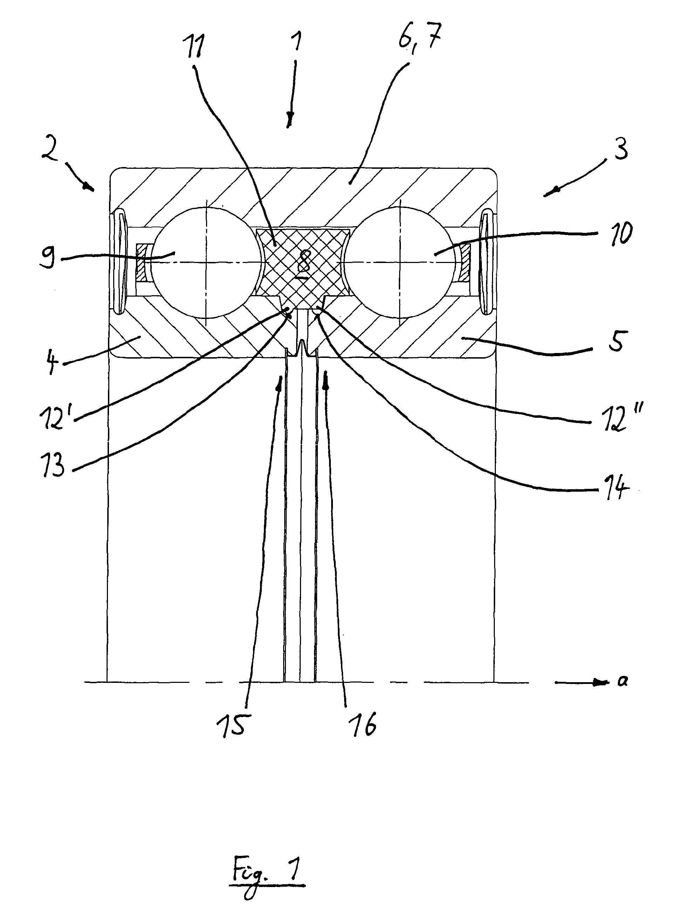

In Fig. 1 ist eine Lageranordnung 1 dargestellt, die zwei Wälzlager 2 und 3 aufweist, nämlich ein erstes Wälzlager 2 und ein zweites Wälzlager 3. Beide Wälzlager sind als Rillenkugellager ausgebildet und weisen jeweils eine Reihe Wälzkörper (Kugeln) 9 bzw. 10 auf. Beide Wälzlager 2, 3 haben hier einen gemeinsamen Außenring 6, 7, der einstückig ausgebildet ist; indes weist jedes Lager 2, 3 einen Innenring 4 bzw. 5 auf.

Zwischen den Innenringen 4, 5 und dem einstückigen Außenring 6, 7 der beiden Lager 2, 3 wird ein Ringraum 8 definiert, in dem bei bestimmungsgemäßem Gebrauch der Lageranordnung 1 Schmierfett eingebracht ist.

Um das Schmierfett möglichst im Bereich der Laufbahnen der beiden Lager 2, 3 zu halten, und zwar auch dann, wenn die Drehachse der Lageranordnung 1 nicht horizontal, sondern abweichend von der Horizontalen gelagert wird, ist ein Volumenelement 11 im Ringraum 8 zwischen Außen- und Innenringen angeordnet.

Es handelt sich vorliegend um einen aus Kunststoffmaterial bestehenden einstückigen Ring, der für den Schmierstoff undurchdringlich ist. Dieser verdrängt das Schmierfett aus dem Ringraum 8 in dem axialen Bereich, über den sich das Volumenelement 11 erstreckt, so dass das Fett im Bereich der Laufbahnen gehalten wird.

In das Volumenelement 11 inkorporiert sind Mittel 12 zur Erzeugung einer axialen Vorspannkraft, d. h. einer Vorspannkraft, die in axiale Richtung a wirkt. Ausgeführt sind diese Mittel 12 hier durch zwei ringförmige Vorsprünge 12' und 12", die sich radial nach innen erstrecken und die in ringnutförmige Vertiefungen 13 bzw. 14 eingreifen, die in den Seitenbereichen 15 bzw. 16 der beiden Wälzlager 2, 3 angeordnet sind. Um diesbezüglich kostengünstig zu arbeiten, werden hier Standardwälzlager eingesetzt, die die besagten Ringnuten 13, 14 in den Lagerringen standardgemäß besitzen, um in ihnen Dichtscheiben zu befestigen.

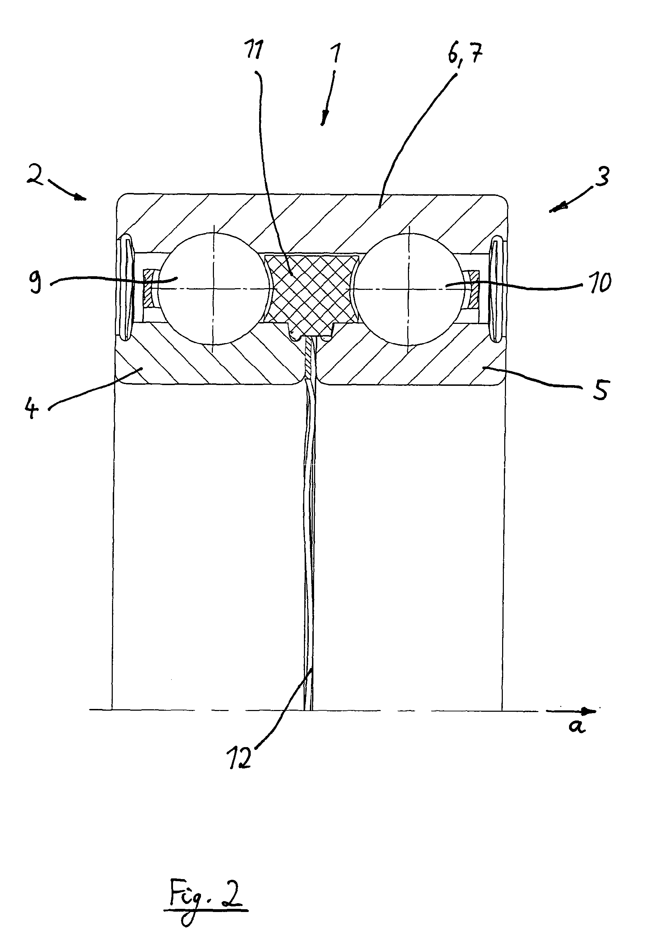

Wie in Fig. 2 gesehen werden kann, kann die Funktionalität des Verdrängens von Schmiermittel durch das Volumenelement 11 und die Herstellung einer axialen Vorspannung durch die Mittel 12 auch separat realisiert werden. Hierzu sind bei der Lösung gemäß dieser Figur Federmittel 12 - hier ausgebildet als gewelltes Federblech - zwischen den beiden Innenringen 4, 5 angeordnet.

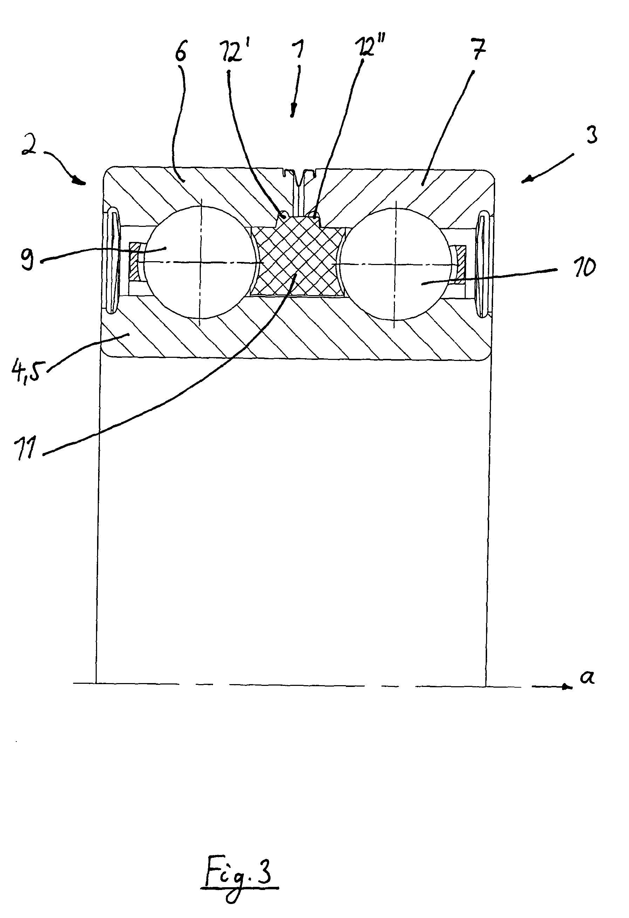

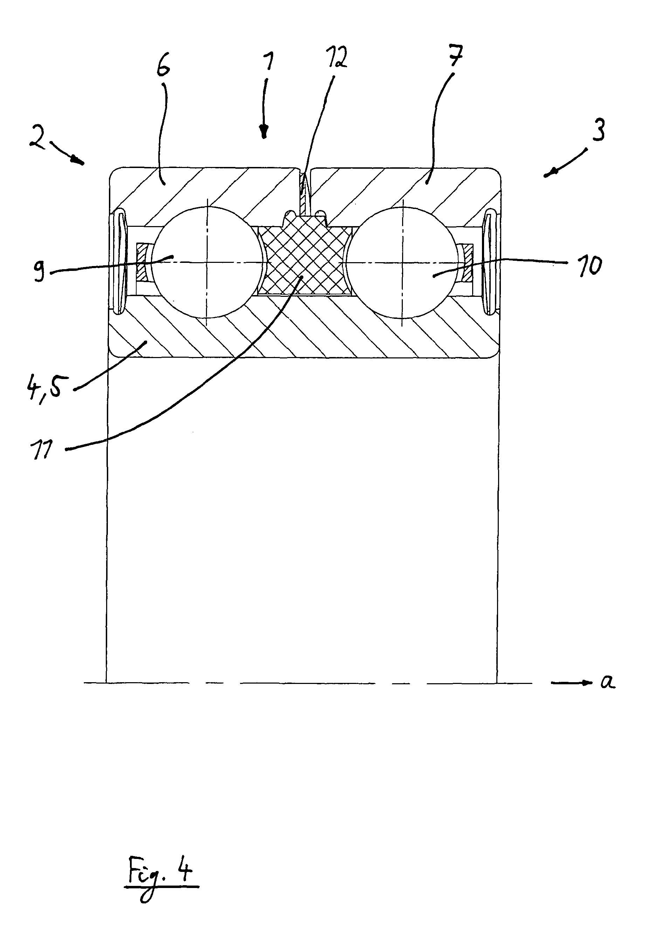

Das Konzept gemäß der Figuren 1 und 2 ist bei den Beispielen gemäß der Figuren 3 und 4 dahingehend übertragen, dass hier der Innenring 4, 5 einteilig ausgebildet ist und separate Außenringe 6, 7 eingesetzt werden. Dabei ist bei dem Beispiel gemäß

Fig. 3 wieder vorgesehen, dass die Mittel 12 zur Erzeugung der Lagervorspannung in das Volumenelement 11 integriert sind, während gemäß Fig. 4 ein separates Federelement (gewelltes Federblech) zwischen den Außenringen 6, 7 eingesetzt ist.

Um die axiale Vorspannkraft hinreichend groß zu gestalten, kann vorgesehen sein, dass in das aus Kunststoffmaterial bestehende Volumenelement 11 ein separates federelastisches Element eingebracht ist, was z. B. durch Umspritzen eines aus Stahl bestehenden Federelements durch das Kunststoffmaterial des Volumenelements 11 erfolgen kann.

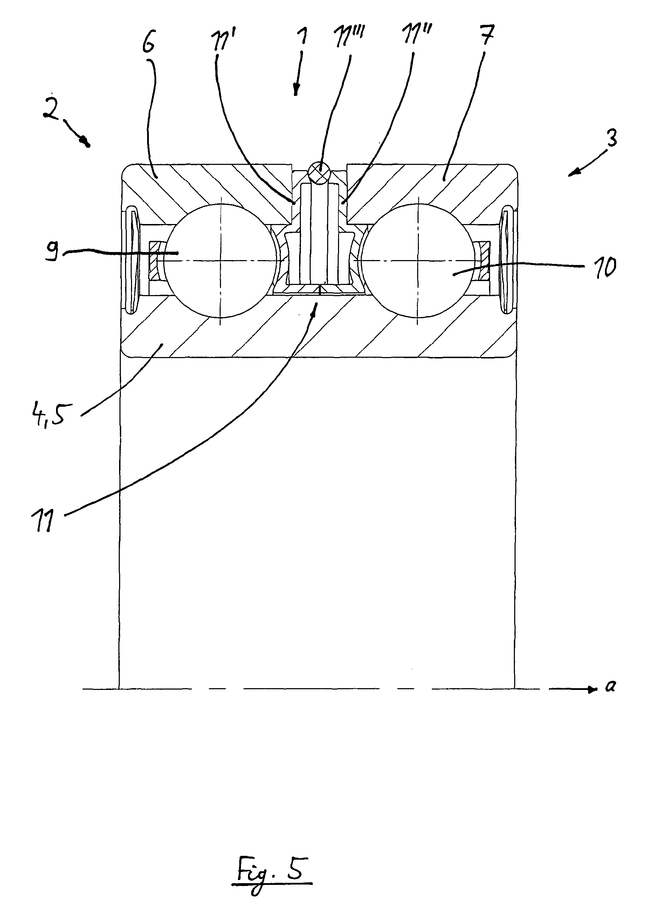

Während in den Beispielen gemäß der Figuren 1 bis 4 das Volumenelement 11 jeweils als einstückiges Kunststoffteil ausgeführt ist, zeigen die Beispiele gemäß den Figuren 5 bis 8 diesbezüglich andere Möglichkeiten.

In Fig. 5 ist zu sehen, dass das Volumenelement 11 aus zwei Seitenteilen 11' und 11" besteht (vorzugsweise gefertigt aus Blech), die jeweils an der Stirnseite der beiden Außenringe 6, 7 anliegen. Zwischen die beiden Seitenteile 11' und 11 " wird ein Mittenteil 11"' eingepresst, wodurch die axiale Vorspannkraft erzeugt wird (was hier zu einer O-Anordnung der beiden Lager 2, 3 führt). Das Mittenteil 11"' ist in diesem Ausführungsbeispiel ein O-Ring aus Elastomermaterial.

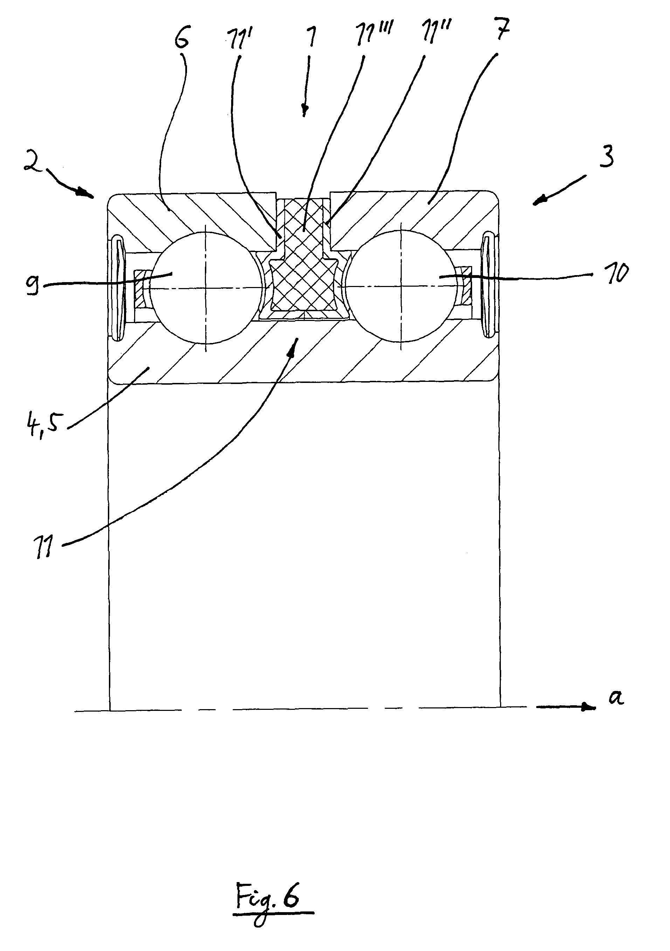

Bei der ersten Ausführungsbeispiel gemäß Fig. 6 ist vorgesehen, dass in den Raum, den die beiden Seitenteile 11' und 11" zwischen sich lassen, in situ Kunststoffschmelze eingespritzt wird. Aufgrund des Spritzgießdrucks des klassischen Spritzgießprozesses werden die beiden Seitenteile 11' und 11" axial auseinandergedrückt; nach der Aushärtung der Kunststoffschmelze, die dann das Mittenteil 11"' bildet, liegt dann aufgrund der elastischen Eigenschaft des Kunststoffmaterials die gewünschte Vorspannung dauerhaft vor.

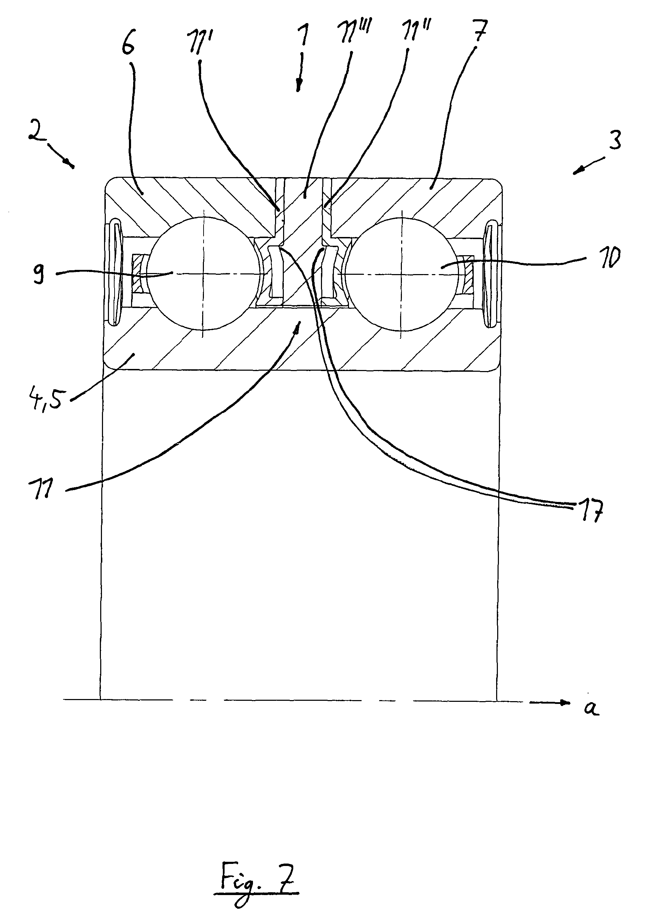

In Fig. 7 ist ein zweites Ausführungsbeispiel gezeigt. Wie in Fig. 5 wird auch hier das Volumenelement 11 durch zwei Seitenteile 11' und 11" gebildet. Das Mittenteil 11"' ist hier allerdings ein vorgefertigter Formkörper, der die Gestalt eines halbkreisförmigen Kreisringsektors hat. Demgemäß wird nach der Vormontage der Lageranordnung und der Seitenteile 11' und 11" je ein Mittenteil 11"' von oben und von unten radial zwischen die Seitenteile 11', 11" eingeschoben. Dies erfolgt so unter Auslegung der Maße und Toleranzen, dass sich nach dem Einschieben der beiden Mittenteile 11"' die gewünschte axiale Vorspannung in der Lageranordnung ergibt.

Damit die kreisringsektorförmigen Mittenteile 11"' nach dem radialen Einschieben in Position bleiben, sind Rastmittel 17 an ihnen angeordnet. Hierbei handelt es sich um in axiale Richtung a vorspringende ringförmige Anformungen am Mittenteil 11"", die nach dem Einschieben formschlüssig hinter einen Absatz am Seitenteil 11', 11" (wie dargestellt) oder in eine entsprechende Ausnehmung im Seitenteil 11', 11" eingreifen (nicht dargestellt).

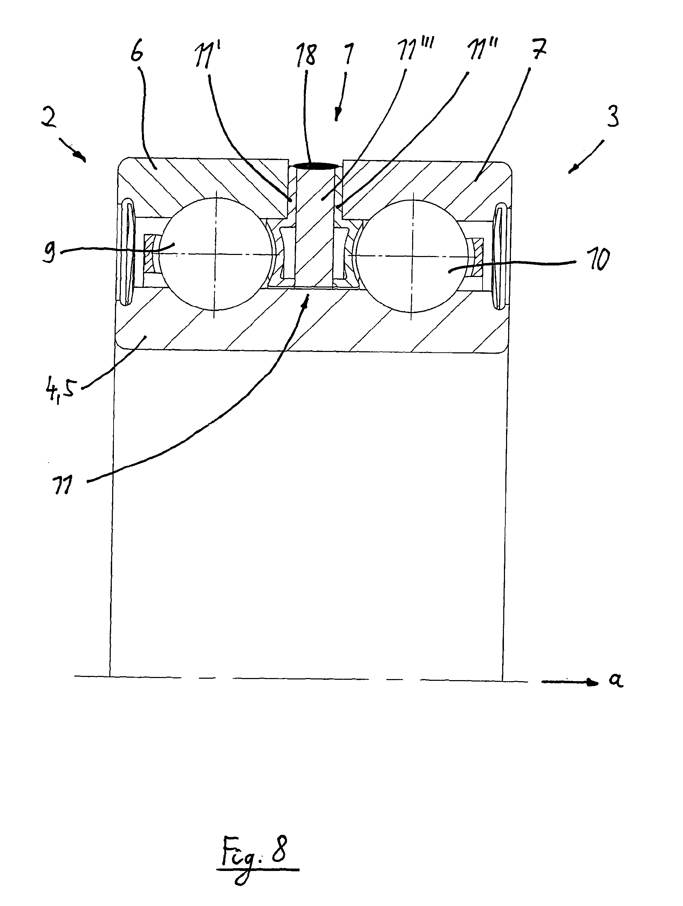

Gemäß Fig. 8 ist ein drittes Ausführungsbeispiel dargestellt, bei dem die Seitenteile 11' und 11" wiederum durch das kreisringsektorförmige Mittenteil 11"' axial auseinandergespreizt werden. Befindet sich das Mittenteil 11"' in der Endposition, erfolgt eine Fixieren der Teile 11', 11" und 11"' durch ein Verbindungsmittel 18, das gemäß Fig. 8 als Schweißpunkt ausgeführt ist.

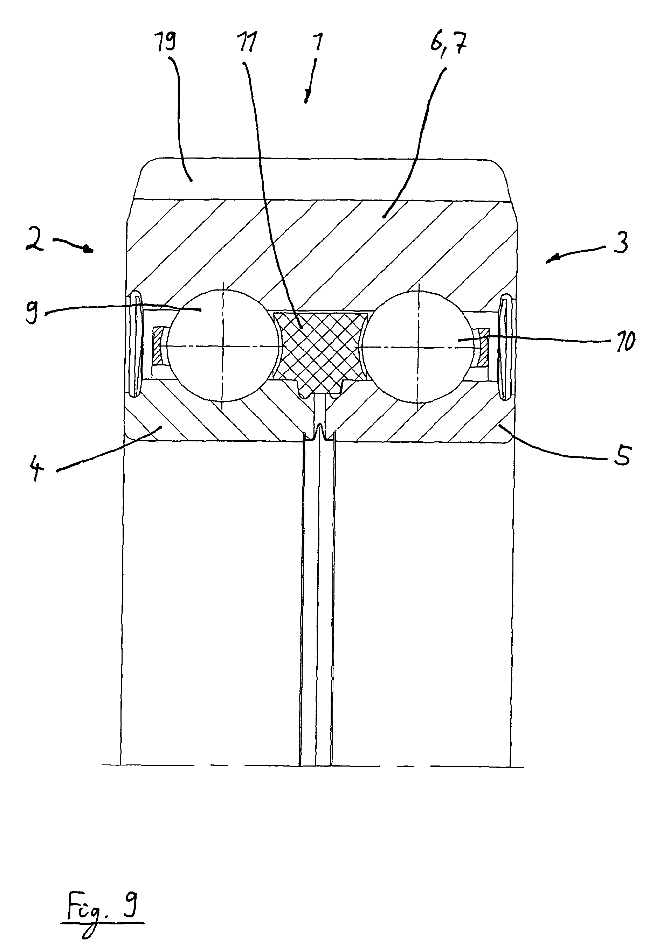

Vorteilhaft kann direkt am einstückig ausgebildeten Außen- oder Innenring unmittelbar ein Funktionsteil ausgebildet sein. In Fig. 9 ist dies für den Außenring 6, 7 skizziert, der direkt als Zahnrad mit einer Verzahnung 19 ausgeführt ist.

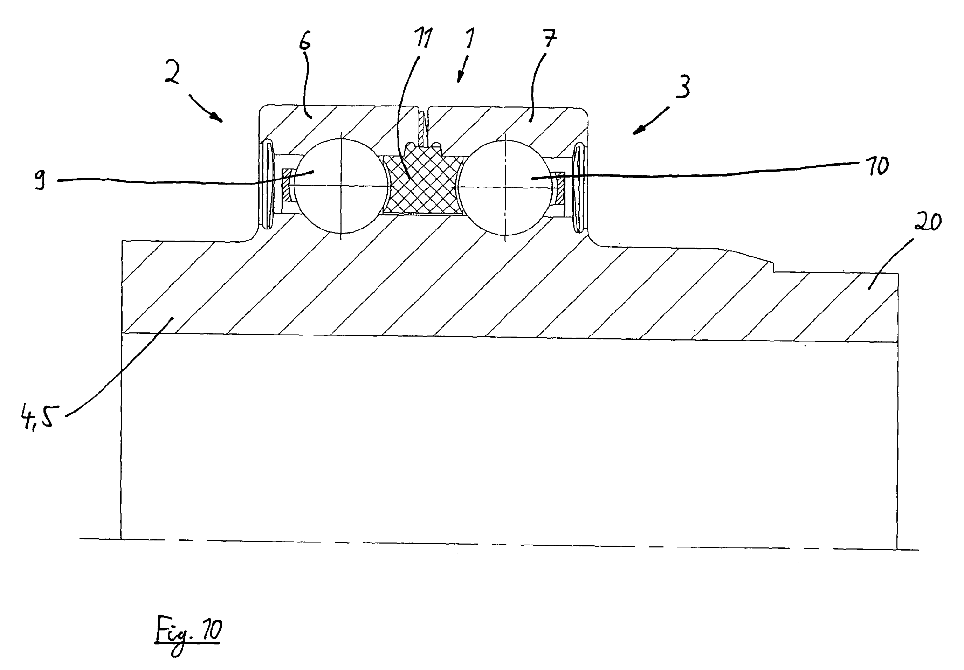

Analog ist der Innenring 4, 5 gemäß Fig. 10 in Form einer Welle 20 verwirklicht.

### Bezugszeichenliste

- 1: Lageranordnung
- 2: Wälzlager
- 3: Wälzlager
- 4: Innenring
- 5: Innenring
- 6: Außenring
- 7: Außenring
- 8: Ringraum
- 9: Wälzkörper
- 10: Wälzkörper
- 11: Volumenelement
- 11': Seitenteil
- 11": Seitenteil
- 11'": Mittenteil
- 12: Mittel zur Erzeugung einer axialen Vorspannkraft
- 12': ringförmiger Vorsprung
- 12": ringförmiger Vorsprung
- 13: ringnutförmige Vertiefung
- 14: ringnutförmige Vertiefung
- 15: Seitenbereich
- 16: Seitenbereich
- 17: Rastmittel
- 18: Verbindungsmittel (Schweißpunkt)
- 19: Verzahnung
- 20: Welle

- a: axiale Richtung

## Patentansprüche

1. Lageranordnung (1), umfassend zwei nebeneinander angeordnete Wälzlager (2, 3), wobei jedes Wälzlager (2, 3) einen Innenring (4, 5) und einen Außenring (6, 7) aufweist, wobei zwischen den Lagerringen (4, 5, 6, 7) ein Ringraum (8) gebildet wird, wobei in dem Ringraum (8) Wälzkörper (9, 10) angeordnet sind, wobei die beiden Innenringe (4, 5) oder die beiden Außenringe (6, 7) der beiden Wälzlager (2, 3) einstückig ausgebildet sind, wobei in dem Ringraum (8) mindestens ein Volumenelement (11) angeordnet ist, das den Ringraum (8) in einem axialen Bereich zumindest teilweise ausfüllt, wobei Mittel (12) vorhanden sind, mit denen zwischen den beiden nicht einstückig ausgebildeten Lagerringen (4, 5, 6, 7) eine in axiale Richtung (a) wirkende Vorspannkraft erzeugbar ist,
**dadurch gekennzeichnet, dass**
die Mittel (12) zur Erzeugung der axial wirkenden Vorspannkraft durch das Volumenelement (11) verwirklicht sind,
wobei das Volumenelement (11) aus zwei Seitenteilen (11', 11 ") gebildet wird, zwischen denen ein Mittenteil (11"') angeordnet ist,
wobei das Mittenteil (11"') aus Kunststoff- oder Gummimaterial besteht, das zwischen den Seitenteilen (11', 11") angeordnet ist,
wobei das Mittenteil (11"') ein zwischen die Seitenteile (11', 11") in situ spritzgegossenes Formteil ist oder wobei das Mittenteil (11"') als mehrteiliger Formkörper ausgebildet ist, wobei jedes Teil des mehrteiligen Formkörpers die Form eines Kreisringsektors aufweist.

2. Lageranordnung nach Anspruch 1, **dadurch gekennzeichnet, dass** die Mittel (12) zur Erzeugung der axial wirkenden Vorspannkraft durch zwei sich in radiale Richtung erstreckende ringförmige und am Volumenelement (11) angeformte Vorsprünge (12', 12") gebildet werden, die in ringnutförmige Vertiefungen (13, 14) eingreifen, die in den benachbarten Seitenbereichen (15, 16) der beiden nicht einstückig ausgebildeten Lagerringe (4, 5, 6, 7) eingearbeitet sind.

3. Lageranordnung nach Anspruch 2, **dadurch gekennzeichnet, dass** sich die ringförmigen Vorsprünge (12', 12") radial nach außen erstrecken und in ringnutförmige Vertiefungen (13, 14) eingreifen, die in zwei separate Außenringe (6, 7) eingearbeitet sind.

4. Lageranordnung nach Anspruch 2, **dadurch gekennzeichnet, dass** sich die ringförmigen Vorsprünge (12', 12") radial nach innen erstrecken und in ringnutförmige Vertiefungen (13, 14) eingreifen, die in zwei separate Innenringe (4, 5) eingearbeitet sind.

5. Lageranordnung nach Anspruch 1, **dadurch gekennzeichnet, dass** die Seitenteile (11', 11 ") aus Blech bestehen, insbesondere aus dünnem Blech mit konstanter Wandstärke.

6. Lageranordnung nach Anspruch 1, **dadurch gekennzeichnet, dass** das Mittenteil (11"') ein O-Ring ist.

7. Lageranordnung nach Anspruch 1, **dadurch gekennzeichnet, dass** das Mittenteil (11"") als zweiteiliger Formkörper ausgebildet ist, wobei sich jedes Teil des Formkörpers über einen Umfangswinkel von 180° erstreckt.

8. Lageranordnung nach Anspruch 1 oder 7, **dadurch gekennzeichnet, dass** die Teile des Mittenteils (11'") mit Rastmitteln (17) versehen sind, mit denen sie in radiale Richtung relativ zu den Seitenteilen (11', 11") festgelegt werden können.

9. Lageranordnung nach einem der Ansprüche 1 bis 8, **dadurch gekennzeichnet, dass** Verbindungsmittel (18) vorhanden sind, mit denen die Seitenteile (11', 11") und das Mittenteil (11"') miteinander verbunden sind.

10. Lageranordnung nach Anspruch 9, **dadurch gekennzeichnet, dass** die Verbindungsmittel (18) als radial außenliegend angeordneter Schweißpunkt ausgebildet sind.

11. Lageranordnung nach einem der Ansprüche 1 bis 10, **dadurch gekennzeichnet, dass** die Wälzlager (2, 3) als Kugellager, insbesondere als Rillenkugellager oder Schrägkugellager, ausgebildet sind.

12. Lageranordnung nach einem der Ansprüche 1 bis 11, **dadurch gekennzeichnet, dass** das Volumenelement (11) im axialen Bereich zwischen den Wälzkörpern (11, 12) der beiden Wälzlager (2, 3) angeordnet ist und den sich zwischen den Wälzkörpern (11, 12) befindlichen Ringraum (8) zwischen den Lagerringen (4, 5, 6, 7) weitgehend ausfüllt.

13. Lageranordnung nach einem der Ansprüche 1 bis 12, **dadurch gekennzeichnet, dass** sich das Volumenelement (11) über den Großteil der radialen Erstreckung des Ringraums (8), insbesondere über mindestens 50 % der radialen Erstreckung des Ringraums (8), erstreckt.

## Claims

1. Bearing arrangement (1), comprising two anti-friction bearings (2, 3) which are arranged next to one another, each anti-friction bearing (2, 3) having an inner ring (4, 5) and an outer ring (6, 7), an annular space (8) being formed between the bearing rings (4, 5, 6, 7), rolling bodies (9, 10) being arranged in the annular space (8), the two inner rings (4, 5) or the two outer rings (6, 7) of the two anti-friction bearings (2, 3) being configured in one piece, at least one volume element (11) being arranged in the annular space (8), which at least one volume element (11) fills the annular space (8) at least partially in an axial region, there being means (12), by way of which a prestressing force which acts in the axial direction (a) can be generated between the two bearing rings (4, 5, 6, 7) which are not configured in one piece, **characterized in that** the means (12) for generating the axially acting prestressing force are realized by the volume element (11), the volume element (11) being formed from two side parts (11', 11"), between which a centre part (11"') is arranged, the centre part (11"') consisting of plastic or rubber material which is arranged between the side parts (11', 11"), the centre part (11"') being a shaped part which is injection-moulded in situ between the side parts (11', 11"), or the centre part (11"') being configured as a multiple-part shaped body, each part of the multiple-part shaped body having the shape of a circular ring segment.

2. Bearing arrangement according to Claim 1, **characterized in that** the means (12) for generating the axially acting prestressing force are formed by two annular projections (12', 12") which extend in the radial direction, are formed integrally on the volume element (11) and engage into annular groove-shaped depressions (13, 14) which are machined into the adjacent side regions (15, 16) of the two bearing rings (4, 5, 6, 7) which are not configured in one piece.

3. Bearing arrangement according to Claim 2, **characterized in that** the annular projections (12', 12") extend radially to the outside and engage into annular groove-shaped depressions (13, 14) which are machined into two separate outer rings (6, 7).

4. Bearing arrangement according to Claim 2, **characterized in that** the annular projections (12', 12") extend radially to the inside and engage into annular groove-shaped depressions (13, 14) which are machined into two separate inner rings (4, 5).

5. Bearing arrangement according to Claim 1, **characterized in that** the side parts (11', 11") consist of sheet metal, in particular of thin sheet metal with a constant wall thickness.

6. Bearing arrangement according to Claim 1, **characterized in that** the centre part (11"') is an O-ring.

7. Bearing arrangement according to Claim 1, **characterized in that** the centre part (11"') is configured as a two-part shaped body, each part of the shaped body extending over a circumferential angle of 180°.

8. Bearing arrangement according to Claim 1 or 7, **characterized in that** the parts of the centre part (11"') are provided with latching means (17), by way of which they can be fixed in the radial direction relative to the side parts (11', 11").

9. Bearing arrangement according to one of Claims 1 to 8, **characterized in that** there are connecting means (18), by way of which the side parts (11', 11") and the centre part (11"') are connected to one another.

10. Bearing arrangement according to Claim 9, **characterized in that** the connecting means (18) are configured as a welded point which is arranged radially on the outside.

11. Bearing arrangement according to one of Claims 1 to 10, **characterized in that** the anti-friction bearings (2, 3) are configured as ball bearings, in particular as groove ball bearings or angular-contact ball bearings.

12. Bearing arrangement according to one of Claims 1 to 11, **characterized in that** the volume element (11) is arranged in the axial region between the rolling bodies (11, 12) of the two anti-friction bearings (2, 3) and largely fills the annular space (8) between the bearing rings (4, 5, 6, 7), which annular space (8) is situated between the rolling bodies (11, 12).

13. Bearing arrangement according to one of Claims 1 to 12, **characterized in that** the volume element (11) extends over the large part of the radial extent of the annular space (8), in particular over at least 50% of the radial extent of the annular space (8).

## Revendications

1. Ensemble palier (1), comportant deux paliers à roulement (2, 3) juxtaposés, chaque palier à roulement (2, 3) comprenant une bague intérieure (4, 5) et une bague extérieure (6, 7), un espace annulaire (8) étant formé entre les bagues de palier (4, 5, 6, 7), des corps de roulement (9, 10) étant disposés dans l'espace annulaire (8), les deux bagues intérieures (4, 5) ou les deux bagues extérieures (6, 7) des deux palier à roulement (2, 3) étant réalisées d'une seule pièce, au moins un élément volumique (11) étant disposé dans l'espace annulaire (8), lequel élément volumique remplit au moins partiellement l'espace annulaire (8) dans une région axiale, des moyens (12) étant présents, à l'aide desquels une force de précontrainte agissant dans la direction axiale (a) peut être produite entre les deux bagues de palier (4, 5, 6, 7) non réalisées d'une seule pièce,
**caractérisé en ce que**
les moyens (12) pour produire la force de précontrainte agissant axialement sont réalisés au moyen de l'élément volumique (11),
l'élément volumique (11) étant formé à partir de deux parties latérales (11', 11") entre lesquelles une partie centrale (11"') est disposée,
la partie centrale (11"') étant constituée de matériau en plastique ou en caoutchouc qui est disposé entre les parties latérales (11', 11"), la partie centrale (11"') étant une partie moulée qui est moulée par injection in situ entre les parties latérales (11', 11") ou la partie centrale (11"') étant réalisée sous forme de corps moulé en plusieurs parties, chaque partie du corps moulé en plusieurs parties présentant la forme d'un secteur annulaire circulaire.

2. Ensemble palier selon la revendication 1, **caractérisé en ce que** les moyens (12) pour produire la force de précontrainte agissant axialement sont formés par deux saillies (12', 12") annulaires s'étendant dans la direction radiale et formées sur l'élément volumique (11), lesquelles viennent en prise dans des évidements (13, 14) en forme de rainure annulaire qui sont incorporés dans les régions latérales adjacentes (15, 16) des deux bagues de palier (4, 5, 6, 7) non réalisées d'une seule pièce.

3. Ensemble palier selon la revendication 2, **caractérisé en ce que** les saillies annulaires (12', 12") s'étendent radialement vers l'extérieur et viennent en prise dans des évidements (13, 14) en forme de rainure annulaire qui sont incorporés dans deux bagues extérieures (6, 7) séparées.

4. Ensemble palier selon la revendication 2, **caractérisé en ce que** les saillies annulaires (12', 12") s'étendent radialement vers l'intérieur et viennent en prise dans des évidements (13, 14) en forme de rainure annulaire qui sont incorporés dans deux bagues intérieures (4, 5) séparées.

5. Ensemble palier selon la revendication 1, **caractérisé en ce que** les parties latérales (11', 11") sont constituées de tôle, en particulier de tôle mince présentant une épaisseur de paroi constante.

6. Ensemble palier selon la revendication 1, **caractérisé en ce que** la partie centrale (11"') est un joint torique.

7. Ensemble palier selon la revendication 1, **caractérisé en ce que** la partie centrale (11"') est réalisée sous forme de corps moulé en deux parties, chaque partie du corps moulé s'étendant sur un angle périphérique de 180°.

8. Ensemble palier selon la revendication 1 ou 7, **caractérisé en ce que** les parties de la partie centrale (11"') sont pourvues de moyens d'encliquetage (17) à l'aide desquels elles peuvent être fixées dans la direction radiale par rapport aux parties latérales (11', 11").

9. Ensemble palier selon l'une quelconque des revendications 1 à 8, **caractérisé en ce que** des moyens de liaison (18) sont présents, à l'aide desquels les parties latérales (11', 11") et la partie centrale (11"') sont reliées les unes aux autres.

10. Ensemble palier selon la revendication 9, **caractérisé en ce que** les moyens de liaison (18) sont réalisés sous forme de point de soudure disposé radialement à l'extérieur.

11. Ensemble palier selon l'une quelconque des revendications 1 à 10, **caractérisé en ce que** les paliers à roulement (2, 3) sont réalisés sous forme de paliers à billes, en particulier sous forme de paliers rainurés à billes ou de paliers à billes à contact oblique.

12. Ensemble palier selon l'une quelconque des revendications 1 à 11, **caractérisé en ce que** l'élément volumique (11) est disposé dans la région axiale entre les corps de roulement (11, 12) des deux paliers à roulement (2, 3) et remplit dans une large mesure l'espace annulaire (8), se trouvant entre les corps de roulement (11, 12), entre les bagues de palier (4, 5, 6, 7).

13. Ensemble palier selon l'une quelconque des revendications 1 à 12, **caractérisé en ce que** l'élément volumique (11) s'étend sur la majeure partie de l'étendue radiale de l'espace annulaire (8), en particulier sur au moins 50 % de l'étendue radiale de l'espace annulaire (8).
